# EUROPÄISCHE PATENTSCHRIFT

(11) **EP 1 479 575 B1**
(45) Veröffentlichungstag und Bekanntmachung des Hinweises auf die Patenterteilung: **28.11.2007**
(21) Anmeldenummer: 03011649.5
(22) Anmeldetag: 22.05.2003
(51) Int. Cl.: B60R 25/00

(54) **Verfahren und Vorrichtung zum Aktivieren einer elektronischen Schaltung in einem Kraftfahrzeug**
Process and apparatus for activation of an electronic circuit in an automobile
Procédé et dispositif d'activation d'un circuit électronique d'un véhicule automobile

(43) Veröffentlichungstag der Anmeldung: 24.11.2004
(73) Patentinhaber: Delphi Technologies, Inc., Troy, MI 48007 (US)
(72) Erfinder: Hombach, Frank, 51674 Wiehl (DE); Hupertz, Stefan, 57462 Olpe (DE); Noll, Diethelm, 57589 Birkenbeul (DE)
(74) Vertreter: Manitz, Finsterwald & Partner GbR

(56) Entgegenhaltungen:
- EP-A- 0 952 052
- DE-A- 4 325 588
- DE-A- 19 825 702

## Beschreibung

Die Erfindung betrifft ein Verfahren und eine Vorrichtung zum Aktivieren mindestens einer elektronischen Schaltung in einem Kraftfahrzeug.

Derartige Verfahren und Vorrichtungen sind grundsätzlich bekannt. Sie kommen beispielsweise dann zum Einsatz, wenn elektronische Schaltungen eines Kraftfahrzeugs während einer Nichtbenutzung des Kraftfahrzeugs zur Reduzierung des Stromverbrauchs in einen so genannten Schlafzustand versetzt werden, in dem die Schaltungen nur beschränkt funktionsfähig sind. Wird das Fahrzeug in Betrieb genommen, so müssen die Schaltungen zunächst aktiviert bzw. "aufgeweckt" werden, d.h. in einen so genannten Wachzustand versetzt werden, in dem sie voll funktionsfähig sind.

Bei einem bekannten schlüssellosen Zugangsberechtigungssystem wird das Aufwecken des Systems durch eine Betätigung eines Fahrzeugtürgriffs durch einen Fahrzeugbenutzer ausgelöst. Das Zugangsberechtigungssystem benötigt etwa 40 ms bis 50 ms, um aus dem Schlafzustand vollständig in den Wachzustand überzugehen. Ist der Wachzustand erreicht, so findet eine Identifikation des Fahrzeugbenutzers statt. Bei einer positiven Identifikation wird eine Zentralverriegelungsvorrichtung des Kraftfahrzeugs freigeschaltet, und die Fahrzeugtüren werden entriegelt. Der gesamte Vorgang von der Betätigung des Türgriffs bis zur Entriegelung der Fahrzeugtüren kann bis zu mehreren 100 ms dauern und von einem Fahrzeugbenutzer als zu lang empfunden werden.

In der DE-A-198 25 702 ist eine in Verbindung mit einer Zugangskontrolleinrichtung eines Kraftfahrzeugs genutzte Radar-Abstandssensorik und in der DE-A-43 25 588 eine in einem Kraftfahrzeug einsetzbare Alarmanlage beschrieben.

Ein Verfahren und eine Vorrichtung gemäß den Oberbegriffen der unabhängigen Ansprüche ist aus der EP-A-0 952 052 bekannt.

Der Erfindung liegt die Aufgabe zugrunde, ein Verfahren und eine Vorrichtung zu schaffen, die eine schnelle Aktivierung mindestens einer elektronischen Schaltung in einem Kraftfahrzeug ermöglichen und gleichzeitig den Gesamtstromverbrauch durch die Fahrzeugelektronik im unbenutzen Zustand des Fahrzeugs reduzieren.

Zur Lösung der Aufgabe sind ein Verfahren und eine Vorrichtung mit den Merkmalen der unabhängigen Ansprüche vorgesehen.

Bei dem erfindungsgemäßen Verfahren wird mittels wenigstens eines Sensors zumindest ein Bereich der Fahrzeugumgebung überwacht. Der Sensor erzeugt bei Eindringen einer Person oder eines Gegenstandes in den überwachten Bereich ein Aktivierungssignal und übermittelt dieses an die Schaltung. Durch das Aktivierungssignal wird die Schaltung aus einem ersten Betriebszustand in einen zweiten Betriebszustand versetzt.

Durch die Überwachung der Fahrzeugumgebung mit Hilfe des Sensors erfolgt die Aktivierung der Schaltung bereits dann, wenn ein Fahrzeugbenutzer oder ein Gegenstand in den durch den Sensor überwachten Bereich eindringt. Erfindungsgemäß wird die Schaltung also nicht erst aktiviert, wenn der Fahrzeugbenutzer einen Fahrzeugtürgriff betätigt, sondern noch bevor er die Fahrzeugtür erreicht hat.

Auf diese Weise ist sichergestellt, dass sich die Schaltung bereits im zweiten, aktivierten Betriebszustand befindet, wenn der Fahrzeugbenutzer den Türgriff betätigt. Der Fahrzeugbenutzer muss also nach Betätigung des Türgriffs nicht erst das "Aufwachen" der Schaltung abwarten, sondern findet bereits beim Herantreten an das Fahrzeug eine vollständig funktionsbereite Schaltung vor.

Erfindungsgemäß werden ein insbesondere schlüsselloses Zugangsberechtigungssystem und eine Zentralverriegelungsvorrichtung des Kraftfahrzeugs aus einem Schlafzustand eingeschränkter Funktionsbereitschaft, insbesondere aus einem Zustand mit reduziertem Stromverbrauch, in einen Wachzustand vollständiger Funktionsbereitschaft versetzt.

Aufgrund des durch den Sensor verursachten Aufweckens des Zugangsberechtigungssystems bzw. der Zentralverriegelungsvorrichtung sind diese Komponenten bereits vollständig funktionsbereit, wenn der Fahrzeugbenutzer zum Öffnen des Fahrzeugs einen Türgriff betätigt. Der Fahrzeugbenutzer kann das Fahrzeug folglich nahezu verzögerungsfrei öffnen. Dabei bedeutet "nahezu verzögerungsfrei" in diesem Zusammenhang, dass zwar eine kurze Zeit vergeht, bis Elektromotoren der Zentralverriegelung die Fahrzeugtüren entriegelt haben, dass der Fahrzeugbenutzer aber nicht den Aktivierungsvorgang des Zugangsberechtigungssystems bzw. der Zentralverriegelungsvorrichtung abwarten muss.

Eine Abfrageeinheit des in den Wachzustand versetzten Zugangsberechtigungssystems fragt die Identität der sich annähernden Person oder des sich annähernden Gegenstandes ab.

Die Identifikation einer in den überwachten Bereich eindringenden Person kann durch Kommunikation der Abfrageeinheit mit einer Identifikationseinrichtung erfolgen, welche die Person zusätzlich zu einem Schlüssel oder anstelle eines Schlüssels bei sich trägt. Eine geeignete Abfrageeinheit kann beispielsweise einen auf dem Gebiet der schlüssellosen Zugangsberechtigungssysteme hinlänglich bekannten Transponder und die Identifikationseinrichtung einen entsprechend ausgebildeten Chip aufweisen. Die Identifikation einer sich dem Fahrzeug annähernden Person kann also durchgeführt werden, bevor die Person den Türgriff betätigt. Hierdurch wird der Vorgang der Entriegelung einer Fahrzeugtür noch weiter beschleunigt.

Erfindungsgemäß wird die Zentralverriegelungsvorrichtung erst nach einer positiven Identifikation einer sich annähernden Person in den Wachzustand versetzt. Dadurch wird ein unnötiges "Aufwecken" der Zentralverriegelungsvorrichtung in dem Fall vermieden, dass sich eine nicht autorisierte Person dem Fahrzeug nähert. Mit anderen Worten wird bei Eindringen einer Person in den überwachten Bereich zwar das Zugangsberechtigungssystem in seinen voll funktionsfähigen Zustand versetzt, und die Abfrageeinheit des Zugangsberechtigungssystems versucht die sich annähernde Person zu identifizieren. Die Zentralverriegelungsvorrichtung aber bleibt in ihrem stromsparenden Schlafzustand, solange die Person nicht positiv identifiziert wird, d.h. solange es sich nicht um beispielsweise den Fahrer handelt. Auf diese Weise wird der Gesamtstromverbrauch durch die Fahrzeugelektronik im unbenutzten Zustand des Fahrzeugs weiter reduziert.

Das Aufwecken der Zentralverriegelungsvorrichtung erst nach positiver Identifikation kann insbesondere dann vorteilhaft sein, wenn das Fahrzeug an einer Stelle geparkt ist, an der sich - beispielsweise aufgrund von Platzmangel - häufiger Personen in den überwachten Bereich hinein bewegen. In einer solchen Situation wird zwar jedes Mal das Zugangsberechtigungssystem aufgeweckt, die Zentralverriegelungsvorrichtung verbleibt aber bis zu einer positiven Identifikation in ihrem Schlafzustand.

Die Abfrageeinheit kann bei einer positiven Identifikation ein Freischaltsignal erzeugen und an die Zentralverriegelungsvorrichtung übermitteln, um diese derart freizuschalten, dass eine Betätigung eines Türgriffs zu einer Entriegelung der Zentralverriegelungsvorrichtung führt.

Zusätzlich zum Zugangsberechtigungssystem und zur Zentralverriegelungsvorrichtung kann durch den Sensor auch ein Alarmsystem des Kraftfahrzeugs in einen Zustand erhöhter Alarmbereitschaft oder erhöhter Empfindlichkeit versetzt werden. Dies kann beispielsweise bedeuten, dass das Alarmsystem bei Eindringen einer Person oder eines Gegenstandes in den Überwachten Bereich aus einem Ruhemodus, in dem in vergleichsweise großen zeitlichen Abständen Detektionssignale durch das Alarmsystem ausgesandt oder Fahrzeugszustände abgefragt und ggf. gespeichert werden, in einen Modus geschaltet wird, in dem dies in vergleichsweise kurzen zeitlichen Abständen geschieht. Es ist sogar denkbar, dass eine aktive Überwachung des Fahrzeugs durch das Alarmsystem erst dann gestartet wird, wenn das Alarmsystem erfindungsgemäß aktiviert wird, d.h. wenn sich eine Person oder ein Gegenstand dem Fahrzeug nähert. In jedem Fall trägt die Überführung des Alarmsystems aus dem Ruhemodus in einen aktiven bzw. empfindlicheren Modus dazu bei, im unbenutzten Zustand des Fahrzeugs den Stromverbrauch durch das Alarmsystem zu reduzieren und ggf. auch die Datenmenge detektierter und gespeicherter Daten zu verringern.

Vorteilhafterweise wird die Fahrzeugumgebung zumindest im Bereich von Fahrzeugtüren und/oder -klappen überwacht. Auf diese Weise ist gewährleistet, dass sich eine einer Fahrzeugtür oder -klappe annähernde Person durch den Sensor erfasst wird und die zumindest eine Schaltung rechtzeitig in die volle Funktionsbereitschaft versetzt wird. Der überwachte Bereich sollte sich dabei so weit vom Fahrzeug weg erstrecken, dass die Zeit, die eine Person vom Eindringen in den überwachten Bereich bis zum Betätigen eines Türgriffs etwa benötigt, ausreichend ist, um die Schaltung zu aktivieren. Gleichzeitig sollte der überwachte Bereich nicht größer als ein Mindestabstand sein, der von an dem Fahrzeug vorbeilaufenden Passanten oder vorbeifahrenden Fahrzeugen unter gewöhnlichen Umständen eingehalten wird, nämlich etwa 0,5 m, damit eine unbeabsichtigte Aktivierung der Schaltung möglichst vermieden wird. Vorzugsweise erstreckt sich der überwachte Bereich nicht wesentlich weiter von einer Fahrzeugflanke weg als die Außenspiegel von dem Fahrzeug abstehen.

Sensorwellen können aus dem Bereich von Außenspiegeln abgestrahlt werden. Die Außenspiegel eignen sich besonders gut für eine Anordnung von Sensoren zur Überwachung der Fahrzeugflanken, d.h. der an die Fahrzeugtüren angrenzenden Fahrzeugumgebung. Zur Überwachung der Fahrzeugumgebung im Bereich der Heckklappe kann zusätzlich mindestens ein Sensor im hinteren Bereich des Fahrzeugs angebracht sein, beispielsweise in die zentrale Bremsleuchte integriert sein. Außerdem kann mindestens ein zusätzlicher Sensor zur Überwachung der Fahrzeugumgebung im Bereich der Motorhaube vorgesehen sein. Bei den Sensoren kann es sich um Infrarotsensoren oder um Ultraschallsensoren handeln, die nach Art eines Bewegungsmelders funktionieren.

Die erfindungsgemäße Vorrichtung zur Aktivierung mindestens einer elektronischen Schaltung in einem Kraftfahrzeug, umfasst mindestens einen Sensor zur Überwachung eines Bereiches der Fahrzeugumgebung, wobei der Sensor direkt oder indirekt mit der elektronischen Schaltung verbunden ist und die Schaltung bei Eindringen einer Person oder eines Gegenstandes in den überwachten Bereich mittels eines durch den Sensor erzeugten Aktivierungssignals aus einem ersten Betriebszustand in einen zweiten Betriebszustand versetzbar ist.

Wie im Zusammenhang mit dem erfindungsgemäßen Verfahren bereits erwähnt wurde, ist der erste Betriebszustand ein Schlafzustand eingeschränkter Funktionsbereitschaft und insbesondere ein Zustand mit reduziertem Stromverbrauch und der zweite Betriebszustand ein Wachzustand vollständiger Funktionsbereitschaft.

Des Weiteren handelt es sich bei den Schaltungen um eine Schaltung eines Zugangsberechtigungssystems und eine Schaltung einer Zentralverriegelungsvorrichtung. Zusätzlich kann eine Schaltung eines Alarmsystems oder zur Steuerung eines Alarmsystems vorgesehen sein.

Nachfolgend wird die Erfindung rein beispielhaft und unter Bezugnahme auf die beigefügte Zeichnung beschrieben. Es zeigen:
- Fig. 1: eine schematische Draufsicht auf ein Kraftfahrzeug mit Sensoren, die zur Überwachung der Fahrzeugumgebung im Bereich der Fahrzeugtüren an Außenspiegeln des Fahrzeugs angeordnet sind; und
- Fig. 2: eine schematische Darstellung der Verbindung der Sensoren von Fig. 1 mit einem Alarmsystem, einem Zugangsberechtigungssystem und einer Zentralverriegelungsvorrichtung des Fahrzeugs.

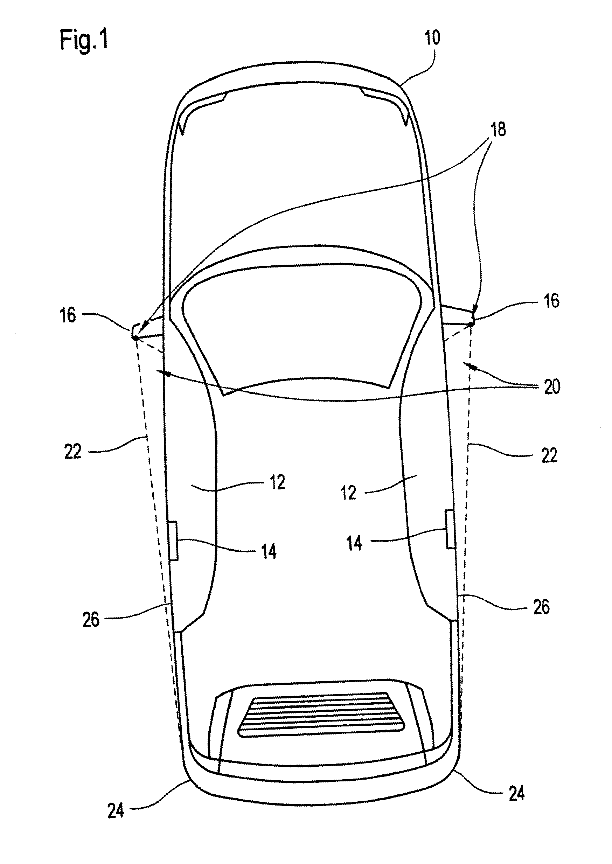

Fig. 1 zeigt eine schematische Draufsicht auf ein Kraftfahrzeug 10 mit zwei Fahrzeugtüren 12. In einem in Fahrtrichtung gesehen hinteren Bereich weist jede Fahrzeugtür 12 einen Türgriff 14 zum Öffnen und Schließen der jeweiligen Fahrzeugtür 12 auf.

In einem in Fahrtrichtung gesehen vorderen Bereich jeder Fahrzeugtür 12 ist ein Außenspiegel 16 vorgesehen. An jedem Außenspiegel 16 ist ein nach hinten gerichteter Sensor 18 angeordnet, der einen an die Fahrzeugtüren 12 angrenzenden Bereich 20 der Fahrzeugumgebung überwacht. Eine äußere Grenze 22 des überwachten Bereiches 20 verläuft in etwa entlang einer gedachten Geraden, die sich von einem äußeren Punkt eines Außenspiegels 16 bis zu einem hinteren Eckbereich 24 des Fahrzeugs 10 erstreckt.

Die durch die Sensoren 18 überwachten Bereiche 20 erstrecken sich folglich nicht weiter von den Flanken 26 des Kraftfahrzeugs 10 weg als die Außenspiegel 16. Auf diese Weise wird erreicht, dass im Wesentlichen nur solche Personen oder Gegenstände durch die Sensoren 18 detektiert werden, die sich bewusst einer Fahrzeugtür 12 annähern.

Im dargestellten Ausführungsbeispiel handelt es sich bei den Sensoren 18 um Infrarotsensoren. Derartige Sensoren 18 detektieren eine Erhöhung der Temperatur im überwachten Bereich 20 und erfassen somit das Eindringen einer Person oder zumindest eines Körperteils in den überwachten Bereich 20. Die Sensoren 18 können beispielsweise auf eine Hand reagieren, die zum Türgriff 14 einer Fahrzeugtür 12 greift.

Alternativ können die Sensoren 18 Ultraschallsensoren sein. In diesem Fall würde jeder Sensor 18 eine Sendekomponente zum Abstrahlen von Ultraschallwellen in den überwachten Bereich 20 und eine Empfangskomponente zum Empfangen von gegebenenfalls an einem in den überwachten Bereich 20 eindringenden Gegenstand oder Körperteil reflektierten Ultraschallwellen aufweisen.

Die Sensoren 18 können beispielsweise nach Art eines Bewegungssensors funktionieren.

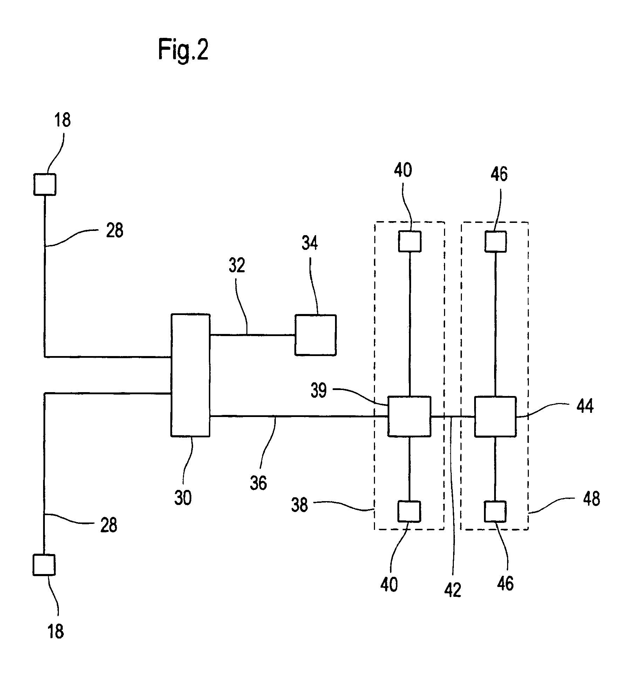

Wie in Fig. 2 gezeigt ist, ist jeder Sensor 18 über eine Leitung 28 mit einer Auswerteeinheit 30 verbunden. Die Auswerteeinheit 30 dient zur Auswertung von Signalen, die von den Sensoren 18 erzeugt werden und an die Auswerteeinheit 30 übermittelt werden.

Die Auswerteeinheit 30 ist ihrerseits über eine Leitung 32 mit einem Alarmsystem 34 und über eine Leitung 36 mit einem Zugangsberechtigungssystem 38 gekoppelt. Das Zugangsberechtigungssystem 38 umfasst eine Auswerteeinheit 39 zum Auswerten von Signalen, die durch Abfrageeinheiten 40 des Zugangsberechtigungssystems 38 erzeugt werden. Die Abfrageeinheiten 40 sind jeweils an einer Fahrzeugtür 12 im Bereich der Türgriffe 14 angeordnet und dienen zum Abfragen bzw. Identifizieren einer Identifikationseinrichtung, die z.B. ein Fahrer des Fahrzeugs 10 bei sich trägt. Die Abfrageeinheiten 40 können jeweils einen Transponder und die Identifikationseinrichtung kann einen Chip aufweisen, der beispielsweise in einen Fahrzeugschlüssel integriert ist.

Das Zugangsberechtigungssystem 38 ist über eine Leitung 42 mit der Steuerung 44 einer Zentralverriegelungsvorrichtung 48 verbunden. Zur Verriegelung bzw. Entriegelung der Fahrzeugtüren 12 steuert die Steuerung 44 der Zentralverriegelungsvorrichtung 48 auf bekannte Weise Elektromotoren 46 an, die in den Fahrzeugtüren 12 angeordnet sind.

Nachfolgend wird das erfindungsgemäße Verfahren anhand des Aufweckens des Alarmsystems 34, des Zugangsberechtigungssystems 38 und der Zentralverriegelungsvorrichtung 48 beschrieben.

Ausgangssituation ist ein geparktes Kraftfahrzeug 10, dessen elektronische Schaltungen, darunter das Alarmsystem 34, das Zugangsberechtigungssystem 38 und die Zentralverriegelungsvorrichtung 48, sich zur Verringerung des Stromverbrauchs in einem Schlafzustand befinden, in dem sie beschränkt funktionsbereit sind. Um die elektronischen Schaltungen, hier das Zugangsberechtigungssystem 38, die Zentralverriegelungsvorrichtung 48 und das Alarmsystem 34, in einen Zustand vollständiger Funktionsbereitschaft zu versetzen, müssen diese Komponenten aktiviert, d.h. aufgeweckt werden. Dies geschieht erfindungsgemäß mit Hilfe der Sensoren 18.

Sobald sich eine Person dem Fahrzeug 10 nähert und in den durch die Sensoren 18 überwachten Bereich 20 eindringt, indem beispielsweise die Person mit der Hand nach dem Türgriff 14 einer Fahrzeugtür 12 greift, wird dies von einem der Sensoren 18 erfasst. Der Sensor 18 erzeugt ein entsprechendes Signal und übermittelt dieses an die Auswerteeinheit 30.

Die von den Sensoren 18 an die Auswerteeinheit 30 übermittelten Signale werden in der Auswerteeinheit 30 ausgewertet. Ergibt die Auswertung, dass es sich um ein ernstzunehmendes Eindringen in den überwachten bereich 20 handelt - und nicht beispielsweise um ein Blatt, das durch den überwachten Bereich 20 gewirbelt wird - so sendet die Auswerteeinheit jeweils ein Aufwecksignal an das Alarmsystem 34 und an das Zugangsberechtigungssystem 38.

Durch das Aufwecksignal kann das Alarmsystem 34 beispielsweise von einem Zustand niedriger Empfindlichkeit in einen Zustand erhöhter Empfindlichkeit versetzt werden, oder es kann eine aktive Überwachung des Fahrzeugs 10 gestartet werden.

Das Zugangsberechtigungssystem 38 wird durch das Aufwecksignal der Auswerteeinheit 30 aus dem stromsparenden Schlafzustand in einen Wachzustand versetzt, in dem es vollständig funktionsbereit ist. Das Aufwecken des Zugangsberechtigungssystems 38 schließt die Aktivierung der Abfrageeinheiten 40 ein, d.h. unmittelbar nach Aufwecken des Zugangsberechtigungssystems 38 senden die Abfrageeinheiten 40 Abfragesignale in die Fahrzeugumgebung aus, um eine Identifikationseinrichtung, die eine sich dem Fahrzeug 10 annähernde Person gegebenenfalls bei sich trägt, zu identifizieren.

Sobald eine Abfrageeinheit 40 eine Identifikationseinrichtung detektiert, übermittelt sie die erfassten Daten zur Auswertung an die Auswerteeinheit 39. Identifiziert die Auswerteeinheit 39 eine Identifikationseinrichtung positiv, so übermittelt sie ein Freischaltsignal an die Steuerung 44 der Zentralverriegelungsvorrichtung 48, damit eine Betätigung eines Türgriffs 14 im Wesentlichen verzögerungsfrei zu einer Entriegelung der Fahrzeugtüren 12 durch die mittels der Steuerung 44 angesteuerten Elektromotoren 46 der Zentralverriegelungsvorrichtung 48 führt.

Erfindungsgemäß kann die Zentralverriegelungsvorrichtung 48 entweder gleichzeitig mit dem Zugangsberechtigungssystem 38 aktiviert werden, oder sie wird erst nach einer positiven Identifikation einer Identifikationseinrichtung durch das Zugangsberechtigungssystem 38 aktiviert.

Es ist auch möglich, dass bei Eindringen einer Person oder eines Gegenstandes in den überwachten Bereich entweder nur das Alarmsystem 34 aktiviert wird oder nur das Zugangsberechtigungssystem 38 und die Zentralverriegelungsvorrichtung 48 aktiviert werden.

Erfindungsgemäß können die Sensoren 18 außerdem direkt mit dem Alarmsystem 34 und/oder dem Zugangsberechtigungssystem 38 bzw. der Zentralverriegelungsvorrichtung 48 verbunden sein. In diesem Fall wird auf die Auswerteeinheit 30 und damit auf eine detaillierte Auswertung der durch die Sensoren 18 erzeugten Signale verzichtet, so dass jedes bei Detektion eines in den überwachten Bereich 20 eindringenden Gegenstandes oder einer eindringenden Person erzeugte Signal der Sensoren 18 zu einem Aufwecken der Systeme führt.

Die Auswerteeinheit 39 des Zugangsberechtigungssystems 38, die Steuerung 44 der Zentralverriegelungsvorrichtung 48 und/ oder die Auswerteeinheit 30 können in einen zentralen Bordcomputer des Fahrzeugs 10 integriert sein.

### Bezugszeichenliste

- 10: Kraftfahrzeug
- 12: Fahrzeugtür
- 14: Türgriff
- 16: Außenspiegel
- 18: Sensor
- 20: überwachter Bereich
- 22: äußere Grenze
- 24: Eckbereich
- 26: Flanke
- 28: Leitung
- 30: Auswerteeinheit
- 32: Leitung
- 34: Alarmsystem
- 36: Leitung
- 38: Zugangsberechtigungssystem
- 40: Abfrageeinheit
- 42: Leitung
- 44: Steuerung
- 46: Elektromotor
- 48: Zentralverriegelungsvorrichtung

## Patentansprüche

1. Verfahren zum Aktivieren mindestens einer elektronischen Schaltung (34, 39, 44) in einem Kraftfahrzeug (10), bei dem
mittels wenigstens eines Sensors (18) zumindest ein Bereich (20) der Fahrzeugumgebung überwacht wird,
der Sensor (18) bei Eindringen einer Person oder eines Gegenstandes in den überwachten Bereich (20) ein Aktivierungssignal erzeugt und an eine Schaltung (39) eines insbesondere schlüssellosen Zugangsberechtigungssystems (38) des Kraftfahrzeugs (10) übermittelt,
das Zugangsberechtigungssystem (38) aus einem Schlafzustand eingeschränkter Funktionsbereitschaft, insbesondere aus einem Zustand mit reduziertem Stromverbrauch, in einen Wachzustand vollständiger Funktionsbereitschaft versetzt wird und
eine Abfrageeinheit (40) des in den Wachzustand versetzten Zugangsberechtigungssystems (38) die Identität der sich annähernden Person oder des sich annähernden Gegenstandes abfragt,
**dadurch gekennzeichnet, dass**
eine Schaltung (44) einer Zentralverriegelungsvorrichtung (48) des Kraftfahrzeugs (10) erst nach einer positiven Identifikation aus einem Schlafzustand eingeschränkter Funktionsbereitschaft und mit reduziertem Stromverbrauch in einen Wachzustand vollständiger Funktionsbereitschaft versetzt wird.

2. Verfahren nach Anspruch 1,
**dadurch gekennzeichnet, dass**
die Abfrageeinheit (40) bei einer positiven Identifikation ein Freischaltsignal erzeugt und an die Zentralverriegelungsvorrichtung (48) übermittelt, um diese derart freizuschalten, dass eine Betätigung eines Türgriffs (14) zu einer Entriegelung einer Fahrzeugtür (12) führt.

3. Verfahren nach Anspruch 1 oder 2,
**dadurch gekennzeichnet, dass**
ein Alarmsystem (34) des Kraftfahrzeugs (10) bei Eindringen einer Person oder eines Gegenstandes in den überwachten Bereich (20) durch den Sensor (18) in einen Zustand erhöhter Alarmbereitschaft oder erhöhter Empfindlichkeit versetzt wird.

4. Verfahren nach einem der vorherigen Ansprüche,
**dadurch gekennzeichnet, dass**
die Fahrzeugumgebung zumindest im Bereich (20) von Fahrzeugtüren (12) und/oder -klappen überwacht wird.

5. Verfahren nach einem der vorherigen Ansprüche,
**dadurch gekennzeichnet, dass**
Sensorwellen aus dem Bereich von Außenspiegeln abgestrahlt werden.

6. Vorrichtung zur Aktivierung mindestens einer elektronischen Schaltung (34, 39, 44) in einem Kraftfahrzeug (10) mit wenigstens einem Sensor (18) zur Überwachung eines Bereiches (20) der Fahrzeugumgebung, wobei der Sensor (18) direkt oder indirekt mit einer elektronischen Schaltung (39) eines Zugangsberechtigungssystems (38) des Kraftfahrzeugs verbunden ist und das Zugangsberechtigungssystem (38) bei Eindringen einer Person oder eines Gegenstandes in den überwachten Bereich (20) mittels eines durch den Sensor (18) erzeugten Aktivierungssignals aus einem Schlafzustand eingeschränkter Funktionsbereitschaft, insbesondere einem Zustand mit reduziertem Stromverbrauch, in einen Wachzustand vollständiger Funktionsbereitschaft versetzbar ist,
wobei das Zugangsberechtigungssystem (38) eine Abfrageeinheit (40) aufweist, um im Wachzustand des Zugangsberechtigungssystems (38) die Identität der sich annähernden Person oder des sich annähernden Gegenstandes abzufragen,
**dadurch gekennzeichnet, dass**
eine Schaltung (44) einer Zentralverriegelungsvorrichtung (48) des Kraftfahrzeugs (10) nach einer positiven Identifikation aus einem Schlafzustand eingeschränkter Funktionsbereitschaft und mit reduziertem Stromverbrauch in einen Wachzustand vollständiger Funktionsbereitschaft versetzbar ist.

7. Vorrichtung nach Anspruch 6,
**gekennzeichnet durch**
eine Schaltung (34) eines Alarmsystems (34) des Kraftfahrzeugs, die bei Eindringen einer Person oder eines Gegenstandes in den überwachten Bereich (20) mittels eines **durch** den Sensor (18) erzeugten Aktivierungssignals aus in einen Zustand erhöhter Alarmbereitschaft oder erhöhter Empfindlichkeit versetzbar ist.

8. Vorrichtung nach Anspruch 6 oder 7,
**dadurch gekennzeichnet, dass**
an einem und insbesondere an jedem Außenspiegel (16) des Kraftfahrzeugs (10) ein Sensor (18) angeordnet ist.

## Claims

1. Method for activating at least one electronic circuit (34, 39, 44) in a motor vehicle (10), wherein
at least one region (20) of the vehicle environment is monitored by means of at least one sensor (18),
the sensor (18) generates an activating signal and transmits it to a circuit (39) of an in particular keyless access authorization system (38) of the vehicle (10) on the intrusion of a person or of an object into the monitored region (20),
the access authorization system (38) is switched from a sleep state of restricted functional readiness, in particular from a state with reduced power consumption, into a waking state of complete functional readiness, and
a polling unit (40) of the access authorization system (38) which is switched into the waking state polls the identity of the approaching person or of the approaching object
**characterized in that**
a circuit (44) of a central locking apparatus (48) of the vehicle (10) is only switched from a sleep state of restricted functional readiness and with reduced power consumption into a waking state of complete functional readiness after a positive identification.

2. A method in accordance with claim 1, **characterized in that** the polling unit (40) generates a release signal on receiving a positive identification and transmits it to the central locking apparatus (48) to release the latter such that an actuation of a door handle (14) leads to an unlocking of a vehicle door (12).

3. Method in accordance with claim 1 or claim 2, **characterized in that** an alarm system (34) of the motor vehicle (10) is switched to a state of increased alarm readiness or increased sensitivity by the sensor (18) on the intrusion of a person or of an object into the monitored region (20).

4. Method in accordance with any one of the preceding claims, **characterized in that** the vehicle environment is monitored at least in the region (20) of vehicle doors (20) and/or vehicle tailgates.

5. Method in accordance with any one of the preceding claims, **characterized in that** sensor waves are transmitted from the region of exterior mirrors.

6. Apparatus for the activation of at least one electronic circuit (34, 39, 44) in a motor vehicle (10) comprising at least one sensor (18) for monitoring a region (20) of the vehicle environment, wherein the sensor (18) is directly or indirectly connected to an electronic circuit (39) of an access authorization system (38) of the vehicle and the access authorization system (38) is switchable from a sleep state of restricted functional readiness, in particular from a state with reduced power consumption, into a waking state of complete functional readiness by the sensor (18) on the intrusion of a person or of an object into the monitored region (20), and
wherein the access authorization system (38) has a polling unit (40) to poll the identity of the approaching person or of the approaching object in the waking state,
**characterized in that**
a circuit (44) of a central locking system (48) of the motor vehicle (10) is switchable from a sleep state of restricted functional readiness and with reduced power consumption into a waking state of complete functional readiness after a positive identification.

7. Method in accordance with claim 6, **characterized in that** a circuit (34) of an alarm system (34) of the motor vehicle can be switched to a state of increased alarm readiness or increased sensitivity by means of an activation signal produced by the sensor (18) on the intrusion of a person or of an object into the monitored region (20).

8. Apparatus in accordance with claim 6 or claim 7, **characterized in that** a sensor (18) is arranged at one exterior mirror (16), and in particular at each exterior mirror (16), of the motor vehicle (10).

## Revendications

1. Procédé d'activation d'au moins un circuit électronique (34, 39, 44) dans un véhicule automobile (10), dans lequel :
au moyen d'au moins un capteur (18), on surveille au moins une zone (20) de l'environnement du véhicule,
le capteur (18) produit, lorsqu'une personne ou un objet pénètre dans la zone surveillée (20), un signal d'activation et le transmet à un circuit (39) d'un système de validation d'accès en particulier sans clé (38) du véhicule automobile (10),
le système de validation d'accès (38) est déplacé d'un état de veille de fonctionnalité limitée, en particulier d'un état avec une consommation de courant réduite, à un état de vigilance de complète fonctionnalité, et
une unité d'interrogation (40) du système de validation d'accès (38) déplacé dans l'état de vigilance, interroge l'identité de la personne qui se rapproche ou de l'objet qui se rapproche,
**caractérisé en ce que** :
un circuit (44) d'un dispositif de verrouillage central (48) du véhicule automobile (10) n'est déplacé qu'après une identification positive, d'un état de veille de fonctionnalité limitée avec une consommation en courant réduite à un état de vigilance de complète fonctionnalité.

2. Procédé selon la revendication 1,
**caractérisé en ce que** :
l'unité d'interrogation (40) produit en cas d'identification positive un signal de déverrouillage et le transmet au dispositif de verrouillage central (48) pour déconnecter celui-ci de sorte qu'un actionnement d'une poignée de porte (14) mène à un déverrouillage d'une porte de véhicule (12).

3. Procédé selon la revendication 1 ou 2,
**caractérisé en ce que** :
un système d'alarme (34) du véhicule automobile (10), lors de la pénétration d'une personne ou d'un objet dans la zone surveillée (20), est déplacé par le capteur (18) dans un état de plus grande fonctionnalité d'alarme ou de plus grande sensibilité.

4. Procédé selon l'une quelconque des revendications précédentes,
**caractérisé en ce que** :
l'environnement du véhicule est surveillé au moins dans la zone (20) des portes (12) et/ou des hayons du véhicule.

5. Procédé selon l'une quelconque des revendications précédentes,
**caractérisé en ce que** :
des ondes de capteur sont émises depuis la zone des rétroviseurs externes.

6. Dispositif d'activation d'au moins un circuit électronique (34, 39, 44) dans un véhicule automobile (10) avec au moins un capteur (18) pour surveiller une zone (20) de l'environnement du véhicule, le capteur (18) étant relié directement ou indirectement à un circuit électronique (39) d'un système de validation d'accès (38) du véhicule automobile et le système de validation d'accès (38) étant déplacé, lors de la pénétration d'une personne ou d'un objet dans la zone surveillée (20), au moyen d'un signal d'activation produit par le capteur (18) d'un état de veille de fonctionnalité limitée, en particulier un état avec une consommation de courant réduite, à un état de vigilance de complète fonctionnalité,
dans lequel le système de validation d'accès (38) présente une unité d'interrogation (40) pour interroger, dans l'état de vigilance du système de validation d'accès (38), l'identité de la personne qui s'approche ou de l'objet qui s'approche,
**caractérisé en ce que** :
un circuit (44) d'un dispositif de verrouillage central (48) du véhicule automobile (10) peut être déplacé, après une identification positive, d'un état de veille de fonctionnalité limitée avec une consommation de courant réduite à un état de vigilance de complète fonctionnalité.

7. Dispositif selon la revendication 6,
**caractérisé par** :
un circuit (34) d'un système d'alarme (34) du véhicule automobile, qui, par pénétration d'une personne ou d'un objet dans la zone surveillée (20), peut être déplacé au moyen d'un signal d'activation produit par le capteur (18) dans un état de fonctionnalité d'alarme élevée ou de sensibilité élevée.

8. Dispositif selon la revendication 6 ou 7,
**caractérisé en ce que** :
un capteur (18) est aménagé sur un rétroviseur externe (16) et, en particulier, sur chaque rétroviseur externe (16) du véhicule automobile (10).
